# EUROPÄISCHE PATENTSCHRIFT

(11) **EP 1 957 833 B1**
(45) Veröffentlichungstag und Bekanntmachung des Hinweises auf die Patenterteilung: **12.08.2009**
(21) Anmeldenummer: 06818708.7
(22) Anmeldetag: 22.11.2006
(51) Int. Cl.: F16H 57/02, F16H 3/093

(54) **LAGERUNG DER GETRIEBEWELLEN EINES DOPPELKUPPLUNGSGETRIEBES**
BEARING ARRANGEMENT OF THE TRANSMISSION SHAFTS OF A TWIN-CLUTCH TRANSMISSION
SUPPORT DE L'ARBRE DE TRANSMISSION D'UNE TRANSMISSION A DOUBLE EMBRAYAGE

(30) Priorität: 09.12.2005 DE 102005058946
(43) Veröffentlichungstag der Anmeldung: 20.08.2008
(73) Patentinhaber: ZF Friedrichshafen AG, 88038 Friedrichshafen (DE)
(72) Erfinder: PATZNER, Jens, 14478 Potsdam (DE)
(86) Internationale Anmeldenummer: PCT/EP2006/011155
(87) Internationale Veröffentlichungsnummer: WO 2007/065560

(56) Entgegenhaltungen:
- DE-A1- 10 343 995
- DE-A1-3102005 005 16
- US-A- 6 044 931

## Beschreibung

Die Erfindung betrifft eine Lagerung der Getriebewellen eines Doppelkupplungsgetriebes, das eine zentrale erste Eingangswelle, die motorseitig mit einer ersten Kupplung einer Doppelkupplungsanordnung verbunden ist, eine kürzere, als Hohlwelle ausgebildete zweite Eingangswelle, die koaxial auf der ersten Eingangswelle angeordnet und mit einer zweiten Kupplung der Doppelkupplungsanordnung verbunden ist, und eine parallel zu den beiden Eingangswellen angeordnete Hauptwelle aufweist, die über mehrere jeweils ein Festrad und ein Losrad umfassende Zahnradstufen sowie eine dem jeweiligen Losrad zugeordnete Schaltkupplung selektiv mit der ersten Eingangswelle und der zweiten Eingangswelle verbindbar ist, und die über eine aus zwei Festrädern gebildete Abtriebskonstante mit einer parallel zu der Hauptwelle angeordneten Abtriebswelle in Verbindung steht, wobei jeder der beiden Eingangswellen jeweils mehrere Gangzahnräder zugeordnet sind, wobei die Losräder benachbarter Zahnradstufen jeweils paarweise auf einer gemeinsamen Getriebewelle angeordnet und wechselweise über zwei in einem Schaltpaket zusammengefasste Schaltkupplungen schaltbar sind, und wobei die Abtriebskonstante im Bereich des getriebeinneren Endes der zweiten Eingangswelle zwischen zwei Paaren von Gangzahnrädern angeordnet ist.

Es ist allgemein bekannt, dass Wellen wie auch Getriebewellen mit einem Festlager und mindestens einem Loslager mit zumeist endseitiger Anordnung der Lager drehbar in einem Gehäuse gelagert werden. Durch das Festlager werden sowohl Radialkräfte als auch Axialkräfte aufgenommen und die Welle axial fixiert. Das Loslager nimmt dagegen nur Radialkräfte auf und ermöglicht durch eine axial verschiebbare Ausbildung des Lagers selbst oder der Fixierung des Lagers in einer Gehäusewand einen Ausgleich einer Längenänderung der betreffenden Welle, die durch Belastungskräfte und durch Wärmedehnung verursacht werden kann.

Ebenso ist es allgemein bekannt, bei der Lagerung einer längeren Welle zwischen den endseitig angeordneten Lagern weitere Loslager vorzusehen, durch die eine größere Durchbiegung der Welle vermieden wird. Insbesondere bei Fahrzeuggetrieben wird jedoch grundsätzlich angestrebt, die Lagerung der Getriebewellen mit möglichst wenig Lagern auszustatten und insgesamt so einfach wie möglich zu gestalten. Hierdurch wird einerseits eine einfache Montage des Getriebes erreicht und andererseits der Bauraum sowie das Gewicht des Getriebes klein gehalten. Die Gestaltungsmöglichkeiten hierzu werden jedoch wesentlich von der Bauart des Getriebes, insbesondere von der Anzahl und der Anordnung der Getriebewellen, bestimmt.

Aus der DE 35 46 454 C2 ist ein Doppelkupplungsgetriebe mit einer zentralen ersten Eingangswelle, einer kürzeren, als Hohlwelle ausgebildeten und koaxial auf der ersten Eingangswelle angeordneten zweiten Eingangswelle, sowie einer parallel zu den beiden Eingangswellen angeordneten Vorgelegewelle bekannt. Die Vorgelegewelle bildet die Ausgangswelle und weist hierzu an ihrem motorseitigen Ende ein Kegelritzel zum Antrieb eines Tellerrads eines Achsdifferenzials auf. Die erste Eingangswelle ist über ein äußeres und ein inneres Kegelrollenlager in einer so genannten angestellten Lagerung in dem Getriebegehäuse gelagert, bei der jedes dieser beiden Lager die jeweils nach außen gerichteten Axialkräfte aufnimmt. In gleicher Weise ist die zweite Eingangswelle über ein äußeres und ein inneres Kegelrollenlager in einer angestellten Lagerung in dem Getriebegehäuse gelagert.

Die Vorgelegewelle ist an ihrem motorseitigen Ende über ein aus zwei Kegelrollenlagern gebildeten Festlager sowie über ein mittig und ein am gegenüber liegenden Ende angeordnetes Loslager in dem Getriebegehäuse gelagert, wobei das mittige Loslager und das innere Kegelrollenlager der zweiten Eingangswelle in einer gemeinsamen Lagerebene liegen sowie in einer separaten Lagerplatte des Getriebegehäuses angeordnet sind.

In der DE 41 23 493 C2 ist dagegen ein Doppelkupplungsgetriebe mit einer zentralen ersten Eingangswelle, einer kürzeren, als Hohlwelle ausgebildeten sowie koaxial auf der ersten Eingangswelle gelagerten zweiten Eingangswelle, und einer parallel zu den beiden Eingangswellen angeordneten Vorgelegewelle beschrieben, bei dem die Ausgangswelle von einer weiteren Getriebewelle gebildet ist, die koaxial zu den beiden Eingangswellen angeordnet ist. Die erste, zentrale Eingangswelle weist einen getriebeinneren Hohlwellenabschnitt auf, mit dem sie über ein inneres Festlager und ein äußeres Loslager auf der Ausgangswelle gelagert ist. Die Ausgangswelle ist über ein Festlager in einer abtriebsseitigen Gehäusewand des Getriebegehäuses gelagert.

Die zweite Eingangswelle ist relativ kurz ausgebildet und über ein Festlager in einer antriebsseitigen Gehäusewand des Getriebegehäuses gelagert. Die erste Eingangswelle ist antriebsseitig über ein äußeres und ein inneres Loslager in der zweiten Eingangswelle gelagert, wobei das innere Loslager in etwa dieselbe Lagerebene wie das Festlager der zweiten Eingangswelle aufweist. Die Vorgelegewelle ist jeweils endseitig auf der Antriebsseite über ein Festlager und auf der Abtriebsseite über ein Loslager in dem Getriebegehäuse gelagert.

Ein weiteres Doppelkupplungsgetriebe mit einer zentralen ersten Eingangswelle und einer kürzeren, als Hohlwelle ausgebildeten und koaxial auf der ersten Eingangswelle gelagerten zweiten Eingangswelle ist aus der DE 101 53 014 A1 bekannt. Dieses Doppelkupplungsgetriebe weist zwei parallel zu den beiden Eingangswellen angeordnete Vorgelegewellen auf, die zusammen mit den beiden Eingangswellen V-förmig angeordnet sind und jeweils über ein Abtriebsfestrad mit einem gemeinsamen Abtriebselement in Verbindung stehen. Die zweite Eingangswelle ist über zwei endseitig angeordnete Axiallager axial schwimmend auf der ersten Eingangswelle gelagert. Die erste Eingangswelle ist über ein an ihrem motorabgewandten Ende angeordnetes Festlager in einer Gehäusewand des Getriebegehäuses und über zwei Loslager in der zweiten Eingangswelle gelagert. Die zweite Eingangswelle ist über ein Loslager in einer motorseitigen Gehäusewand des Getriebegehäuses radial gelagert, in dessen Lagerebene auch das äußere Loslager der ersten Eingangswelle angeordnet ist.

Im Gegensatz zu den vorgenannten Getrieben wird in der nicht vorveröffentlichten DE 10 2005 005 163 A1 der Anmelderin ein Doppelkupplungsgetriebe vorgestellt, das neben einer zentralen ersten Eingangswelle, die motorseitig mit einer ersten Kupplung einer Doppelkupplung verbunden ist, einer kürzeren, als Hohlwelle ausgebildeten zweiten Eingangswelle, die koaxial auf der ersten Eingangswelle angeordnet sowie mit einer zweiten Kupplung der Doppelkupplung verbunden ist, und einer parallel zu den beiden Eingangswellen angeordneten Hauptwelle zusätzlich eine Ritzelwelle aufweist, welche parallel zu der Hauptwelle angeordnet ist und über eine aus zwei Festrädern gebildete und im Bereich des getriebeinneren Endes der zweiten Eingangswelle zwischen zwei Paaren von Gangzahnrädern angeordnete Abtriebskonstante mit der Hauptwelle in Verbindung steht.

Aus der DE 10343995 A1 ist eine Lagerung der betriebewellen eines Doppel-Kupplungsgetriebes nach dem Oberbegriff des Anspruchs 1 bekannt.

Der vorliegenden Erfindung liegt die Aufgabe zugrunde Erfindung, eine optimale Lagerung der Getriebewellen für das aus der DE 10343995 A1 bekannte Doppelkupplungsgetriebe sowie für ähnlich aufgebaute Doppelkupplungsgetriebe anzugeben.

Gemäß den Merkmalen des Anspruchs 1 geht die Erfindung daher aus von einer Lagerung für die Getriebewellen eines Doppelkupplungsgetriebes, das eine zentrale erste Eingangswelle, die motorseitig mit einer ersten Kupplung einer Doppelkupplungsanordnung verbunden ist, eine kürzere, als Hohlwelle ausgebildete zweite Eingangswelle, die koaxial auf der ersten Eingangswelle angeordnet und mit einer zweiten Kupplung der Doppelkupplungsanordnung verbunden ist, und eine parallel zu den beiden Eingangswellen angeordnete Hauptwelle aufweist, die über mehrere jeweils ein Festrad und ein Losrad umfassende Zahnradstufen und eine dem Losrad zugeordnete Schaltkupplung selektiv mit der ersten Eingangswelle und der zweiten Eingangswelle verbindbar ist, und die über eine aus zwei Festrädern gebildete Abtriebskonstante mit einer parallel zu der Hauptwelle angeordneten Abtriebswelle in Verbindung steht, wobei jeder der beiden Eingangswellen jeweils mehrere Gangzahnräder zugeordnet sind, wobei die Losräder benachbarter Zahnradstufen jeweils paarweise auf einer gemeinsamen Getriebewelle angeordnet und wechselweise über zwei in einem Schaltpaket zusammengefasste Schaltkupplungen schaltbar sind, und wobei die Abtriebskonstante im Bereich des getriebeinneren Endes der zweiten Eingangswelle zwischen zwei Paaren von Gangzahnrädern angeordnet ist.

Zur Lösung der gestellten Aufgabe ist eine durch eine innere Gehäusewand des Getriebegehäuses gebildete Lagerebene vorgesehen, die axial benachbart zu der Abtriebskonstante angeordnet ist, wobei in dieser Lagerebene ein Lager der Hauptwelle in der genannten Gehäusewand, ein Lager der ersten Antriebswelle in der zweiten Antriebswelle und ein Lager der zweiten Antriebswelle in der Gehäusewand angeordnet sind.

Durch die Lager dieser zusätzlichen Lagerebene wird auf Platz sparende Weise eine etwa mittige Durchbiegung sowohl der Hauptwelle als auch der ersten Eingangswelle vermieden, wobei die erste Eingangswelle über das radial innere Lager, die Hohlwand der zweiten Eingangswelle und das radial äußere Lager in der inneren Gehäusewand radial abgestützt ist. Hierdurch wird die mechanische Belastung aller Getriebewellen, der betreffenden Wellenlager und der Verzahnungen der Gangzahnräder reduziert, welches weniger Verschleiß und geringere Laufgeräusche zur Folge hat. Aufgrund dieser Umstände können die Getriebewellen auch mit geringerem Durchmesser bzw. mit reduzierter Wandstärke ausgeführt und damit das Gewicht des Doppelkupplungsgetriebes vermindert werden.

Vorteilhafte Ausgestaltungen der erfindungsgemäßen Lagerung sind Gegenstand der Ansprüche 2 bis 15.

Die innere Gehäusewand wird vorteilhaft durch eine Lagerplatte gebildet, die als Flanschplatte zwischen zwei Gehäuseteilen oder an einem Flanschbund innerhalb eines Gehäuseteils des Getriebegehäuses befestigt ist. Hierdurch können die Gehäuseteile des Getriebegehäuses als Hohlkörper ohne innere Gehäusewände und Gehäusestege ausgeführt werden. Da damit innere Hinterschneidungen entfallen, können die Gehäuseteile in dem vergleichsweise schnellen und preisgünstigen Druckgussverfahren mit einfacher Entformung aus den Druckgussformen hergestellt werden.

Die zusätzliche Lagerebene ist zweckmäßig auf derjenigen Seite der Abtriebskonstante angeordnet, auf der die Gangzahnräder der kleineren Gänge, insbesondere des zweiten Ganges und des Rückwärtsganges liegen, da diese bei gegebenem Antriebsmoment die größeren Umfangskräfte übertragen, die als Radialkräfte auf die betreffenden Getriebewellen wirksam sind. Möglich ist aber auch eine Anordnung der Lagerebene auf der getriebeinneren Seite der Abtriebskonstante, wodurch die Hauptwelle und die erste Eingangswelle jeweils in etwa mittig zwischen den äußeren Lagern radial abgestützt werden.

Die drei innerhalb der Gehäusewand angeordneten Lager sind bevorzugt als Loslager ausgebildet, da dies die Montage der Getriebewellen stark vereinfacht. In diesem Fall ist zweckmäßig, die erste Eingangswelle außer über das in der inneren Gehäusewand angeordnete Lager über ein auf der motorabgewandten Seite außerhalb der äußeren Gangzahnräder in einer äußeren Gehäusewand des Getriebegehäuses angeordnetes Festlager und motorseitig über ein in dem Kupplungskorb der Doppelkupplungsanordnung angeordnetes Loslager zu lagern.

Die zweite Eingangswelle kann dann entsprechend außer über das in der inneren Gehäusewand angeordnete Lager motorseitig über ein zwischen dem Kupplungskorb und den äußeren Gangzahnrädern in einer kupplungsnahen Gehäusewand des Getriebegehäuses angeordnetes Festlager gelagert sein.

Die Hauptwelle ist in diesem Fall zweckmäßig außer über das in der inneren Gehäusewand angeordnete Lager über ein auf der motorabgewandten Seite außerhalb der äußeren Gangzahnräder in der äußeren Gehäusewand des Getriebegehäuses angeordnetes Festlager und über ein motorseitig außerhalb der äußeren Gangzahnräder in der kupplungsnahen Gehäusewand des Getriebegehäuses angeordnetes Loslager gelagert.

Möglich ist jedoch auch eine Ausbildung des in der inneren Gehäusewand angeordneten Lagers der ersten Eingangswelle als Festlager, wobei die erste Eingangswelle zusätzlich dazu über ein auf der motorabgewandten Seite außerhalb der äußeren Gangzahnräder in der äußeren Gehäusewand des Getriebegehäuses angeordnetes Loslager und motorseitig über ein in dem Kupplungskorb der Doppelkupplungsanordnung angeordnetes Loslager gelagert ist.

Ebenso kann das in der inneren Gehäusewand angeordnete Lager der zweiten Eingangswelle als Festlager ausgebildet sein, und die zweite Eingangswelle zusätzlich dazu motorseitig über ein zwischen dem Kupplungskorb und den äußeren Gangzahnrädern in der kupplungsnahen Gehäusewand des Getriebegehäuses angeordnetes Loslager gelagert sein.

Des Weiteren kann auch das in der inneren Gehäusewand angeordnete Lager der Hauptwelle als Festlager ausgebildet sein, und die Hauptwelle zusätzlich dazu über ein auf der motorabgewandten Seite außerhalb der äußeren Gangzahnräder in der äußeren Gehäusewand des Getriebegehäuses angeordnetes Loslager und über ein motorseitig außerhalb der äußeren Gangzahnräder in der kupplungsnahen Gehäusewand des Getriebegehäuses angeordnetes Loslager gelagert sein.

Im Extremfall sind somit alle drei in der inneren Gehäusewand angeordneten Lager als Loslager ausgebildet, was in der Ausführung der inneren Gehäusewand als Lagerplatte eine Vormontage der Getriebewellen in dieser ermöglicht.

Der Kupplungskorb der Doppelkupplungsanordnung ist vorteilhaft über ein motorseitiges Festlager und ein getriebeseitiges Loslager in den Gehäusewänden eines Kupplungsgehäuses gelagert.

Aufgrund ihrer Robustheit und ihres Platz sparenden Aufbaus sind die Loslager bevorzugt als Zylinderrollenlager oder als Nadellager und die Festlager als Rillenkugellager ausgebildet.

Zur Verdeutlichung der Erfindung ist der Beschreibung eine Zeichnung mit zwei Ausführungsbeispielen beigefügt.

In dieser zeigt:
- Fig. 1: ein Doppelkupplungsgetriebe mit einer ersten bevorzugten Ausführung der Lagerung der Getriebewellen und
- Fig. 2: ein Doppelkupplungsgetriebe mit einer zweiten bevorzug- ten Ausführung der Lagerung der Getriebewellen.

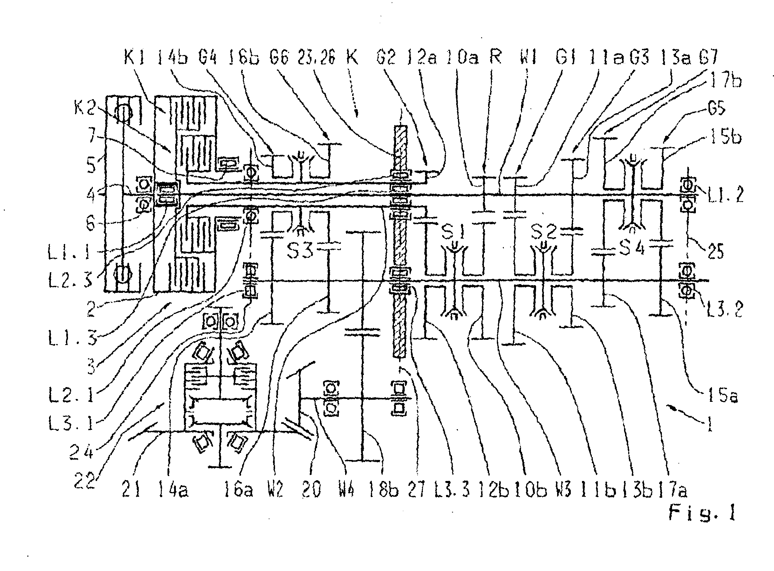

In einem Doppelkupplungsgetriebe 1 gemäß Fig. 1 steht der Kupplungskorb 2 einer Doppelkupplungsanordnung 3 über eine Antriebswelle 4 und einen Drehschwingungsdämpfer 5 mit der Kurbelwelle eines nicht abgebildeten Verbrennungsmotors in Verbindung. Eine erste Kupplung K1 der Doppelkupplungsanordnung 3 ist mit einer zentralen ersten Eingangswelle W1 verbunden. Eine zweite Kupplung K2 der Doppelkupplungsanordnung 3 ist mit einer kürzeren zweiten Eingangswelle W2 verbunden, die als Hohlwelle ausgebildet und koaxial auf der ersten Eingangswelle W1 angeordnet ist. Eine Hauptwelle W3 ist parallel zu den beiden Eingangswellen W1, W2 angeordnet sowie über jeweils ein Festrad und ein Losrad umfassende Gangzahnräder, die Zahnradstufen bilden, und den Losrädern zugeordnete Schaltkupplungen selektiv mit den Eingangswellen W1, W2 verbindbar.

Die Gangzahnräder 10a, 10b des Rückwärtsgangs R, die Gangzahnräder 11a, 11b des ersten Gangs G1, die Gangzahnräder 13a, 13b des dritten Gang, die Gangzahnräder 17a, 17b des siebten Gangs G7 und die Gangzahnräder 15a, 15b des fünften Gangs G5 sind der ersten Eingangswelle W1 zugeordnet. Die Gangzahnräder 14a, 14b des vierten Gangs G4, die Gangzahnräder 16a, 16b des sechsten Gangs G6, sowie die Gangzahnräder 12a, 12b des zweiten Gangs G2 sind der zweiten Eingangswelle W2 zugeordnet.

Die Losräder 10b und 12b des Rückwärtsgangs R und des zweiten Gangs G2 sind auf der Hauptwelle W3 angeordnet und wechselweise über eine Schaltmuffe und zwei Schaltkupplungen schaltbar, die in einem ersten Schaltpaket S1 zusammengefasst sind. Die Losräder 11 b und 13b des ersten Gangs G1 und des dritten Gangs G3 sind ebenfalls auf der Hauptwelle W3 angeordnet und wechselweise über ein entsprechendes zweites Schaltpaket S2 schaltbar. Die Losräder 14b und 16b des vierten Gangs G4 und des sechsten Gangs G6 sind auf der zweiten Eingangswelle W2 angeordnet und wechselweise über ein drittes Schaltpaket S3 schaltbar. Die Losräder 15b und 17b des fünften Gangs G5 und des siebten Gangs G7 sind auf der ersten Eingangswelle W1 angeordnet und wechselweise über ein viertes Schaltpaket S4 schaltbar.

Die Hauptwelle W3 steht über eine aus zwei Festrädern 18a und 18b gebildete Abtriebskonstante K mit einer Abtriebswelle W4 in Verbindung, wobei das der Hauptwelle W3 zugeordnete Festrad 18a zwischen dem Festrad 16a des sechsten Gangs G6 und dem Losrad 12b des zweiten Gangs G2 angeordnet ist. Die Abtriebswelle W4 weist ein Kegelrad 20 auf, welches mit dem Tellerrad 21 eines Achsdifferenzials 22 in Eingriff steht.

Die erste Eingangswelle W1 ist über ein auf der motorabgewandten Seite außerhalb der axial äußeren Gangzahnräder 15a, 15b in einer äußeren Gehäusewand des Getriebegehäuses angeordnetes Festlager L1.2, motorseitig über ein in dem Kupplungskorb 2 der Doppelkupplungsanordnung 3 angeordnetes Loslager L1.1 und dazwischen über ein weiteres Loslager L1.3 in der zweiten Eingangswelle W2 gelagert.

Die zweite Eingangswelle W2 ist motorseitig über ein zwischen dem Kupplungskorb 2 und den äußeren Gangzahnrädern 14a, 14b in einer kupplungsnahen Gehäusewand des Getriebegehäuses angeordnetes Festlager L2.1 und an ihrem getriebeinneren Ende über ein Loslager L2.3 in einer inneren Gehäusewand 23 des Getriebegehäuses gelagert.

Die Hauptwelle W3 ist über ein auf der motorabgewandten Seite axial außerhalb der äußeren Gangzahnräder 15a, 15b in der äußeren Gehäusewand des Getriebegehäuses angeordnetes Festlager L3.2, über ein motorseitig axial außerhalb der äußeren Gangzahnräder 14a, 14b in der kupplungsnahen Gehäusewand des Getriebegehäuses angeordnetes Loslager L3.1 und dazwischen über ein weiteres Loslager L3.3 in der inneren Gehäusewand 23 des Getriebegehäuses gelagert.

Die motorseitigen Lager L2.1 und L3.1 der zweiten Eingangswelle W2 und der Hauptwelle W3 sind in einer ersten Lagerebene 24 angeordnet. Die auf der motorabgewandten Seite befindlichen Lager L1.2, L3.2 der ersten Eingangswelle W1 und der Hauptwelle W3 sind in einer zweiten Lagerebene 25 angeordnet. Die innere Gehäusewand 23 ist zwischen den Zahnrädern 18a und 18b der Abtriebskonstante K und den Gangzahnrädern 12a und 12b des zweiten Gangs G2 angeordnet sowie als eine Lagerplatte 26 ausgeführt, die mit Befestigungsmitteln, wie Schrauben, in dem Getriebegehäuse montierbar ist. Die Lagerplatte 26 bildet eine dritte Lagerebene 27 für die Lager L1.3, L2.3 und L3.3 der ersten Eingangswelle W1 und der zweiten Eingangswelle W2 sowie der Hauptwelle W3.

Durch die Ausbildung und Anordnung der inneren Gehäusewand 23 ist auf Platz sparende Weise eine weitgehend mittige Lagerung der ersten Eingangswelle W1 und der Hauptwelle W3 geschaffen, durch die eine größere Durchbiegung dieser Wellen verhindert und somit diesbezügliche Fluchtungsfehler an den Verzahnungen der Gangzahnräder und selbst an den Lagern der Wellen W1, W3 sowie daraus resultierende Verschleißerscheinungen vermieden werden.

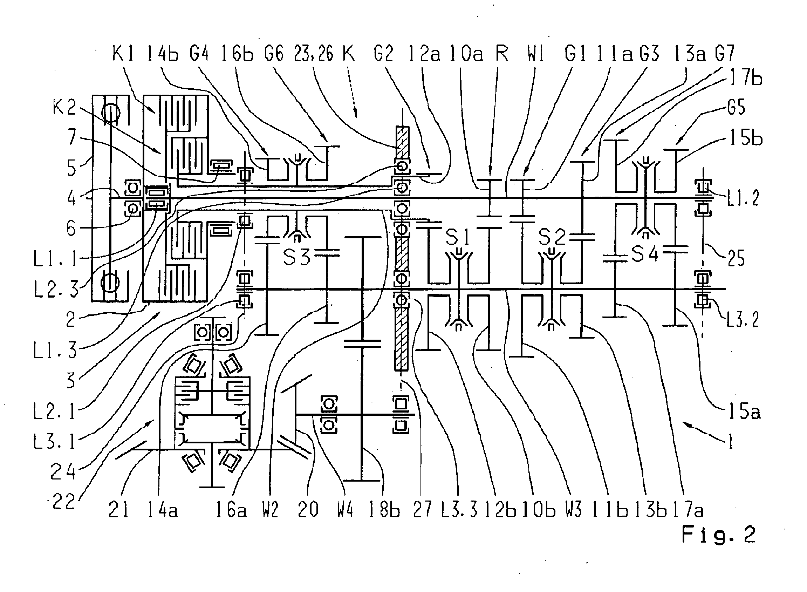

Im Gegensatz zu Fig. 1, in der alle Lager L1.3, L2.3, L3.3 der dritten Lagerebene 27 als Loslager ausgeführt sind, sind diese Lager bei dem Doppelkupplungsgetriebe gemäß Fig. 2 beispielhaft als Festlager ausgebildet, so dass die betreffenden Wellen W1, W2 und W3 in der Lagerplatte 26 vormontiert sowie zusammen mit dieser in das Getriebegehäuse eingesetzt werden können. In diesem Fall müssen die anderen Lager, insbesondere das motorabgewandte Lager L1.2 der ersten Eingangswelle W1, das motorseitige Lager L2.1 der zweiten Eingangswelle W2 und das motorabgewandte Lager L3.2 der Hauptwelle W3 als Loslager ausgeführt sein.

In beiden Ausführungsformen der Erfindung ist der Kupplungskorb 2 der Doppelkupplungsanordnung 3 jeweils über ein motorseitiges Festlager 6 und ein getriebeseitiges Loslager 7 in den Gehäusewänden eines Kupplungsgehäuses drehbar gelagert.

Ohne eine Festlegung auf diese bevorzugten Bauarten sind in Fig. 1 und Fig. 2 die Loslager jeweils symbolisch als Zylinderrollenlager oder als Nadellager und die Festlager jeweils als Rillenkugellager dargestellt.

### Bezugszeichen

- 1: Doppelkupplungsgetriebe
- 2: Kupplungskorb
- 3: Doppelkupplungsanordnung
- 4: Antriebswelle
- 5: Drehschwingungsdämpfer
- 6: Festlager
- 7: Loslager
- 10a: Festrad (von R)
- 10b: Losrad (von R)
- 11a: Festrad (von G1)
- 11b: Losrad (von G1)
- 12a: Festrad (von G2)
- 12b: Losrad (von G2)
- 13a: Festrad (von G3)
- 13b: Losrad (von G3)
- 14a: Festrad (von G4)
- 14b: Losrad (von G4)
- 15a: Festrad (von G5)
- 15b: Losrad (von G5)
- 16a: Festrad (von G6)
- 16b: Losrad (von G6)
- 17a: Festrad (von G7)
- 17b: Losrad (von G7)
- 18a: Festrad (von K)
- 18b: Festrad (von K)
- 20: Kegelrad
- 21: Tellerrad
- 22: Achsdifferenzial
- 23: innere Gehäusewand
- 24: erste Lagerebene
- 25: zweite Lagerebene
- 26: Lagerplatte
- 27: dritte Lagerebene

- G1: erster Gang
- G2: zweiter Gang
- G3: dritter Gang
- G4: vierter Gang
- G5: fünfter Gang
- G6: sechster Gang
- G7: siebter Gang
- K: Abtriebskonstante
- K1: erste Kupplung (von 3)
- K2: zweite Kupplung (von 3)
- L1.1: (erstes) Lager (von W1)
- L1.2: (zweites) Lager (von W1)
- L1.3: (drittes) Lager (von W1)
- L2.1: (erstes) Lager (von W2)
- L2.3: (zweites) Lager (von W2)
- L3.1: (erstes) Lager (von W3)
- L3.2: (zweites) Lager (von W3)
- L3.3: (drittes) Lager (von W3)
- S1: erstes Schaltpaket
- S2: zweites Schaltpaket
- S3: drittes Schaltpaket
- S4: viertes Schaltpaket

- W1: erste Eingangswelle
- W2: zweite Eingangswelle
- W3: Hauptwelle
- W4: Abtriebswelle

## Patentansprüche

1. Lagerung der Getriebewellen eines Doppelkupplungsgetriebes (1), das eine zentrale erste Eingangswelle (W1), die motorseitig mit einer ersten Kupplung (K1) einer Doppelkupplungsanordnung verbunden ist, eine kürzere, als Hohlwelle ausgebildete zweite Eingangswelle (W2), die koaxial auf der ersten Eingangswelle (W1) angeordnet und mit einer zweiten Kupplung (K2) der Doppelkupplungsanordnung verbunden ist, und eine parallel zu den beiden Eingangswellen (W1, W2) angeordnete Hauptwelle (W3) aufweist, die über mehrere jeweils ein Festrad und ein Losrad umfassende Zahnradstufen sowie eine dem jeweiligen Losrad zugeordnete Schaltkupplung selektiv mit der ersten Eingangswelle (W1) und der zweiten Eingangswelle (W2) verbindbar ist, und die über eine aus zwei Festrädern gebildete Abtriebskonstante (K) mit einer parallel zu der Hauptwelle (W3) angeordneten Abtriebswelle (W4) in Verbindung steht, wobei jeder der beiden Eingangswellen (W1, W2) jeweils mehrere Gangzahnräder zugeordnet sind, wobei die Losräder benachbarter Zahnradstufen jeweils paarweise auf einer gemeinsamen Getriebewelle angeordnet und wechselweise über zwei in einem Schaltpaket zusammengefasste Schaltkupplungen schaltbar sind, und wobei die Abtriebskonstante (K) im Bereich des getriebeinneren Endes der zweiten Eingangswelle (W2) zwischen zwei Paaren von Gangzahnrädern angeordnet ist, wobei eine durch eine innere Gehäusewand (23) des Getriebegehäuses gebildete Lagerebene (27) vorgesehen ist, die axial benachbart zu der Abtriebskonstante (K) liegt, **dadurch gekennzeichnet, dass** in der Lagerebene (27) ein Lager (L3.3) der Hauptwelle (W3) in der Gehäusewand (23), ein Lager (L1.3) der ersten Eingangswelle (W1) in der zweiten Eingangswelle (W2), und ein Lager (L2.3) der zweiten Eingangswelle (W2) in der Gehäusewand (23) angeordnet sind.

2. Lagerung nach Anspruch 1, **dadurch gekennzeichnet, dass** die innere Gehäusewand (23) durch eine Lagerplatte (26) gebildet ist, die als Flanschplatte zwischen zwei Gehäuseteilen oder an einem Flanschbund innerhalb eines Gehäuseteils des Getriebegehäuses befestigt ist.

3. Lagerung nach Anspruch 1 oder 2, **dadurch gekennzeichnet, dass** die Lagerebene (27) auf derjenigen Seite der Abtriebskonstante (K) angeordnet ist, auf der die Gangzahnräder (12a, 12b, 10a, 10b) der kleineren Gänge (G2, R) liegen.

4. Lagerung nach Anspruch 1 oder 2, **dadurch gekennzeichnet, dass** die Lagerebene (27) auf der getriebeinneren Seite der Abtriebskonstante (K) angeordnet ist.

5. Lagerung nach einem der Ansprüche 1 bis 4, **dadurch gekennzeichnet, dass** die drei in der inneren Gehäusewand (23) angeordneten Lager (L1.3, L2.3, L3.3) als Loslager ausgebildet sind.

6. Lagerung nach Anspruch 5, **dadurch gekennzeichnet, dass** die erste Eingangswelle (W1) außer über das in der inneren Gehäusewand (23) angeordnete Lager (L1.3) über ein auf der motorabgewandten Seite axial außerhalb der äußeren Gangzahnräder (15a, 15b) in einer äußeren Gehäusewand des Getriebegehäuses angeordnetes Festlager (L1.2) und motorseitig über ein in dem Kupplungskorb (2) der Doppelkupplungsanordnung (3) angeordnetes Loslager (L1.1) gelagert ist.

7. Lagerung nach Anspruch 5 oder 6, **dadurch gekennzeichnet, dass** die zweite Eingangswelle (W2) außer über das in der inneren Gehäusewand (23) angeordnete Lager (L2.3) motorseitig über ein zwischen dem Kupplungskorb (2) und den axial äußeren Gangzahnrädern (14a, 14b) in einer kupplungsnahen Gehäusewand des Getriebegehäuses angeordnetes Festlager (L2.1) gelagert ist.

8. Lagerung nach einem der Ansprüche 5 bis 6, **dadurch gekennzeichnet, dass** die Hauptwelle (W3) außer über das in der inneren Gehäusewand (23) angeordnete Lager (L3.3) über ein auf der motorabgewandten Seite außerhalb der axial äußeren Gangzahnräder (15a, 15b) in der äußeren Gehäusewand des Getriebegehäuses angeordnetes Festlager (L3.2) und über ein motorseitig außerhalb der axial äußeren Gangzahnräder (14a, 14b) in der kupplungsnahen Gehäusewand des Getriebegehäuses angeordnetes Loslager (L3.1) gelagert ist.

9. Lagerung nach einem der Ansprüche 1 bis 4, **dadurch gekennzeichnet, dass** das in der inneren Gehäusewand (23) angeordnete Lager (L1.3) der ersten Eingangswelle (W1) als Festlager ausgebildet ist, und dass die erste Eingangswelle (W 1) zusätzlich dazu über ein auf der motorabgewandten Seite außerhalb der axial äußeren Gangzahnräder (15a, 15b) in der äußeren Gehäusewand des Getriebegehäuses angeordnetes Loslager (L1.2) und motorseitig über ein in dem Kupplungskorb (2) der Doppelkupplungsanordnung (3) angeordnetes Loslager (L1.1) gelagert ist.

10. Lagerung nach einem der Ansprüche 1 bis 4 oder 9, **dadurch gekennzeichnet, dass** das in der inneren Gehäusewand (23) angeordnete Lager (L2.3) der zweiten Eingangswelle (W2) als Festlager ausgebildet ist, und dass die zweite Eingangswelle (W2) zusätzlich dazu motorseitig über ein zwischen dem Kupplungskorb (2) und den axial äußeren Gangzahnrädern (14a, 14b) in der kupplungsnahen Gehäusewand des Getriebegehäuses angeordnetes Loslager (L2.1) gelagert ist.

11. Lagerung nach einem der Ansprüche 1 bis 4 oder 9 bis 10, **dadurch gekennzeichnet, dass** das in der inneren Gehäusewand (23) angeordnete Lager (L3.3) der Hauptwelle (W3) als Festlager ausgebildet ist, und dass die Hauptwelle (W3) zusätzlich dazu über ein auf der motorabgewandten Seite außerhalb der axial äußeren Gangzahnräder (15a, 15b) in der äußeren Gehäusewand des Getriebegehäuses angeordnetes Loslager (L3.2) und über ein motorseitig außerhalb der axial äußeren Gangzahnräder (14a, 14b) in der kupplungsnahen Gehäusewand des Getriebegehäuses angeordnetes Loslager (L3.1) gelagert ist.

12. Lagerung nach einem der Ansprüche 1 bis 11, **dadurch gekennzeichnet, dass** der Kupplungskorb (2) der Doppelkupplungsanordnung (3) über ein motorseitiges Festlager (6) und ein getriebeseitiges Loslager (7) in den Gehäusewänden eines Kupplungsgehäuses gelagert ist.

13. Lagerung nach einem der Ansprüche 5 bis 12, **dadurch gekennzeichnet, dass** zumindest eines der Loslager als Zylinderrollenlager ausgebildet ist.

14. Lagerung nach einem der Ansprüche 5 bis 13, **dadurch gekennzeichnet, dass** zumindest eines der Loslager als Nadellager ausgebildet ist.

15. Lagerung nach einem der Ansprüche 5 bis 14, **dadurch gekennzeichnet, dass** zumindest eines der Festlager als Rillenkugellager ausgebildet ist.

## Claims

1. Mounting of the transmission shafts of a dual clutch transmission (1) which has a central first input shaft (W1), which is connected on the engine side to a first clutch (K1) of a dual clutch arrangement, a shorter second input shaft (W2), which is configured as a hollow shaft, is arranged coaxially on the first input shaft (W1) and is connected to a second clutch (K2) of the dual clutch arrangement, and a main shaft (W3) which is arranged parallel to the two input shafts (W1, W2), can be connected selectively to the first input shaft (W1) and the second input shaft (W2) via a plurality of gearwheel stages, which in each case comprise a fixed gear and a movable gear, and a clutch which is assigned to the respective movable gear, and which main shaft (W3) is connected to an output shaft (W4) which is arranged parallel to the main shaft (W3) via an output constant (K) which is formed from two fixed gears, each of the two input shafts (W1, W2) being assigned in each case a plurality of gear wheels, the movable gears of adjacent gearwheel stages being arranged in each case in pairs on a common transmission shaft and it being possible for them to be selected alternately via two clutches which are combined in one shifting package, and the output constant (K) being arranged between two pairs of gear wheels in the region of that end of the second input shaft (W2) which is in the interior of the transmission, a bearing plane (27) being provided which is formed by an inner housing wall (23) of the transmission housing and lies axially adjacent to the output constant (K), **characterized in that**, in the bearing plane (27), a bearing (L3.3) of the main shaft (W3) is arranged in the housing wall (23), a bearing (L1.3) of the first input shaft (W1) is arranged in the second input shaft (W2), and a bearing (L2.3) of the second input shaft (W2) is arranged in the housing wall (23).

2. Mounting according to Claim 1, **characterized in that** the inner housing wall (23) is formed by a bearing plate (26) which is fastened as a flange plate between two housing parts or to a flange collar within a housing part of the transmission housing.

3. Mounting according to Claim 1 or 2, **characterized in that** the bearing plane (27) is arranged on that side of the output constant (K), on which the gear wheels (12a, 12b, 10a, 10b) of the smaller gears (G2, R) lie.

4. Mounting according to Claim 1 or 2, **characterized in that** the bearing plane (27) is arranged on that side of the output constant (K) which is in the interior of the transmission.

5. Mounting according to one of Claims 1 to 4, **characterized in that** the three bearings (L1.3, L2.3, L3.3) which are arranged in the inner housing wall (23) are configured as floating bearings.

6. Mounting according to Claim 5, **characterized in that**, in addition to via the bearing (L1.3) which is arranged in the inner housing wall (23), the first input shaft (W1) is mounted via a locating bearing (L1.2) which is arranged on the side facing away from the engine axially outside the outer gear wheels (15a, 15b) in an outer housing wall of the transmission housing, and, on the engine side, via a floating bearing (L1.1) which is arranged in the clutch basket (2) of the dual clutch arrangement (3).

7. Mounting according to Claim 5 or 6, **characterized in that**, in addition to via the bearing (L2.3) which is arranged in the inner housing wall (23), the second input shaft (W2) is mounted on the engine side via a locating bearing (L2.1) which is arranged in a housing wall of the transmission housing close to the clutch between the clutch basket (2) and the axially outer gear wheels (14a, 14b).

8. Mounting according to either of Claims 5 and 6, **characterized in that**, in addition to via the bearing (L3.3) which is arranged in the inner housing wall (23), the main shaft (W3) is mounted via a locating bearing (L3.2) which is arranged on the side facing away from the engine outside the axially outer gear wheels (15a, 15b) in the outer housing wall of the transmission housing, and via a floating bearing (L3.1) which is arranged on the engine side outside the axially outer gear wheels (14a, 14b) **in that** housing wall of the transmission housing which is close to the clutch.

9. Mounting according to one of Claims 1 to 4, **characterized in that that** bearing (L1.3) of the first input shaft (W1) which is arranged in the inner housing wall (23) is configured as a locating bearing, and **in that**, in addition to this, the first input shaft (W1) is mounted via a floating bearing (L1.2) which is arranged on the side facing away from the engine outside the axially outer gear wheels (15a, 15b) in the outer housing wall of the transmission housing, and, on the engine side, via a floating bearing (L1.1) which is arranged in the clutch basket (2) of the dual clutch arrangement (3).

10. Mounting according to one of Claims 1 to 4 or 9, **characterized in that that** bearing (L2.3) of the second input shaft (W2) which is arranged in the inner housing wall (23) is configured as a locating bearing, and **in that**, in addition to this, the second input shaft (W2) is mounted on the engine side via a floating bearing (L2.1) which is arranged between the clutch basket (2) and the axially outer gear wheels (14a, 14b) **in that** housing wall of the transmission housing which is close to the clutch.

11. Mounting according to one of Claims 1 to 4 or 9 and 10, **characterized in that that** bearing (L3.3) of the main shaft (W3) which is arranged in the inner housing wall (23) is configured as a locating bearing, and **in that**, in addition to this, the main shaft (W3) is mounted via a floating bearing (L3.2) which is arranged on the side facing away from the engine outside the axially outer gear wheels (15a, 15b) in the outer housing wall of the transmission housing, and via a floating bearing (L3.1) which is arranged on the engine side outside the axially outer gear wheels (14a, 14b) **in that** housing wall of the transmission housing which is close to the clutch.

12. Mounting according to one of Claims 1 to 11, **characterized in that** the clutch basket (2) of the dual clutch arrangement (3) is mounted via an engine-side locating bearing (6) and a transmission-side floating bearing (7) in the housing walls of a clutch housing.

13. Mounting according to one of Claims 5 to 12, **characterized in that** at least one of the floating bearings is configured as a cylindrical roller bearing.

14. Mounting according to one of Claims 5 to 13, **characterized in that** at least one of the floating bearings is configured as a needle bearing.

15. Mounting according to one of Claims 5 to 14, **characterized in that** at least one of the locating bearings is configured as a groove ball bearing.

## Revendications

1. Support des arbres de transmission d'une transmission à double embrayage (1), qui présente un premier arbre d'entrée central (W1), qui est connecté du côté du moteur à un premier embrayage (K1) d'un agencement de double embrayage, un deuxième arbre d'entrée plus court (W2), réalisé sous forme d'arbre creux, qui est disposé coaxialement au premier arbre d'entrée (W1) et qui est connecté à un deuxième embrayage (K2) de l'agencement de double embrayage, et un arbre principal (W3) disposé parallèlement aux deux arbres d'entrée (W1, W2), qui peut être connecté de manière sélective au premier arbre d'entrée (W1) et au deuxième arbre d'entrée (W2) par le biais de plusieurs étages de roues dentées comprenant à chaque fois une roue fixe et une roue libre, et par le biais d'un embrayage de changement de vitesse associé à la roue libre respective, et qui est en liaison par le biais d'une constante de sortie (K) formée de deux roues fixes avec un arbre de sortie (W4) disposé parallèlement à l'arbre principal (W3), chacun des deux arbres d'entrée (W1, W2) étant associé à chaque fois à plusieurs roues dentées de vitesse, les roues libres d'étages de roues dentées adjacents étant disposées à chaque fois par paire sur un arbre de transmission commun et pouvant être commutées de manière alternée par le biais de deux embrayages de changement de vitesse réunis en un paquet de changement de vitesse, et la constante d'entraînement de sortie (K) dans la région de l'extrémité interne de la transmission du deuxième arbre d'entrée (W2) étant disposée entre deux paires de roues dentées de vitesse, un plan de palier (27) formé par une paroi de boîtier interne (23) du boîtier de transmission étant prévu, lequel se situe axialement à côté de la constante de sortie (K), **caractérisé en ce que** dans le plan de palier (27) sont disposés un palier (L3.3) de l'arbre principal (W3) dans la paroi de boîtier (23), un palier (L1.3) du premier arbre d'entrée (W1) dans le deuxième arbre d'entrée (W2), et un palier (L2.3) du deuxième arbre d'entrée (W2) dans la paroi de boîtier (23).

2. Support selon la revendication 1, **caractérisé en ce que** la paroi interne du boîtier (23) est formée par une plaque de palier (26) qui est fixée en tant que plaque de bride entre deux parties de boîtier ou sur un épaulement à bride à l'intérieur d'une partie du boîtier de la transmission.

3. Support selon la revendication 1 ou 2, **caractérisé en ce que** le plan de palier (27) est disposé du côté de la constante de sortie (K) sur lequel se trouvent les roues dentées de vitesse (12a, 12b, 10a, 10b) des plus petites vitesses (G2, R).

4. Support selon la revendication 1 ou 2, **caractérisé en ce que** le plan de palier (27) est disposé du côté de la constante de sortie (K) intérieur à la transmission.

5. Support selon l'une quelconque des revendications 1 à 4, **caractérisé en ce que** les trois paliers (L1.3, L2.3, L3.3) disposés dans la paroi interne du boîtier (23) sont réalisés sous forme de paliers libres.

6. Support selon la revendication 5, **caractérisé en ce que** le premier arbre d'entrée (W1) est monté non seulement par le biais du palier (L1.3) disposé dans la paroi interne du boîtier (23), mais aussi par le biais d'un palier fixe (L1.2) disposé du côté opposé au moteur, axialement en dehors des roues dentées de vitesse extérieures (15a, 15b) dans une paroi de boîtier extérieure du boîtier de transmission, et du côté du moteur, par le biais d'un palier libre (L1.1) disposé dans la cloche d'embrayage (2) de l'agencement de double embrayage (3).

7. Support selon la revendication 5 ou 6, **caractérisé en ce que** le deuxième arbre d'entrée (W2) est monté non seulement par le biais du palier (L2.3) disposé dans la paroi interne du boîtier (23) mais aussi du côté du moteur par le biais d'un palier fixe (L2.1) disposé entre la cloche d'embrayage (2) et les roues dentées de vitesse axialement extérieures (14a, 14b) dans une paroi du boîtier de transmission proche de l'embrayage.

8. Support selon l'une quelconque des revendications 5 à 6, **caractérisé en ce que** l'arbre principal (W3) est monté non seulement par le biais du palier (L3.3) disposé dans la paroi interne du boîtier (23), mais aussi par le biais d'un palier fixe (L3.2) disposé du côté opposé au moteur en dehors des roues dentées de vitesse axialement extérieures (15a, 15b) dans la paroi extérieure du boîtier de transmission, et par le biais d'un palier libre (L3.1) disposé du côté du moteur en dehors des roues dentées de vitesse axialement extérieures (14a, 14b) dans la paroi du boîtier de transmission proche de l'embrayage.

9. Support selon l'une quelconque des revendications 1 à 4, **caractérisé en ce que** le palier (L1.3) du premier arbre d'entrée (W1) disposé dans la paroi interne du boîtier (23) est réalisé sous forme de palier fixe, et **en ce que** le premier arbre d'entrée (W1) est en plus monté par le biais d'un palier libre (L1.2) disposé du côté opposé au moteur en dehors des roues dentées de vitesse axialement extérieures (15a, 15b) dans la paroi extérieure du boîtier de transmission, et du côté du moteur, par le biais d'un palier libre (L1.1) disposé dans la cloche d'embrayage (2) de l'agencement de double embrayage (3).

10. Support selon l'une quelconque des revendications 1 à 4 ou 9, **caractérisé en ce que** le palier (L2.3) du deuxième arbre d'entrée (W2) disposé dans la paroi intérieure du boîtier (23) est réalisé sous forme de palier fixe, et **en ce que** le deuxième arbre d'entrée (W2) est en outre monté du côté du moteur par le biais d'un palier libre (L2.1) disposé entre la cloche d'embrayage (2) et les roues dentées de vitesse axialement extérieures (14a, 14b) dans la paroi du boîtier de la transmission proche de l'embrayage.

11. Support selon l'une quelconque des revendications 1 à 4 ou 9 à 10, **caractérisé en ce que** le palier (L3.3) de l'arbre principal (W3) disposé dans la paroi intérieure du boîtier (23) est réalisé sous forme de palier fixe, et **en ce que** l'arbre principal (W3) est en outre monté par le biais d'un palier libre (L3.2) disposé du côté opposé au moteur en dehors des roues dentées de vitesse axialement extérieures (15a, 15b) dans la paroi extérieure du boîtier de transmission, et par le biais d'un palier libre (L3.1) disposé du côté du moteur en dehors des roues dentées de vitesse axialement extérieures (14a, 14b) dans la paroi du boîtier de transmission proche de l'embrayage.

12. Support selon l'une quelconque des revendications 1 à 11, **caractérisé en ce que** la cloche d'embrayage (2) de l'agencement de double embrayage (3) est montée par le biais d'un palier fixe (6) du côté du moteur et d'un palier libre (7) du côté de la transmission, dans les parois d'un boîtier d'embrayage.

13. Support selon l'une quelconque des revendications 5 à 12, **caractérisé en ce qu'**au moins l'un des paliers libres est réalisé sous forme de palier à rouleaux cylindriques.

14. Support selon l'une quelconque des revendications 5 à 13, **caractérisé en ce qu'**au moins l'un des paliers libres est réalisé sous forme de palier à aiguilles.

15. Support selon l'une quelconque des revendications 5 à 14, **caractérisé en ce qu'**au moins l'un des paliers fixes est réalisé sous forme de palier rainuré à billes.
